# EUROPEAN PATENT APPLICATION

(11) **EP 4 761 027 A1**
(43) Date of publication of application: **17.06.2026**
(21) Application number: 25219523.5
(22) Date of filing: 28.11.2025
(51) Int. Cl.: H02G 3/32

(54) **CABLE CLAMPING DEVICE FOR GARDEN OR LAND MAINTENANCE APPARATUS, USE OF THE CABLE CLAMPING DEVICE, AND APPARATUS EQUIPPED WITH SUCH A CABLE CLAMPING DEVICE**

(30) Priority: 16.12.2024 IT 202400028572
(71) Applicant: Stiga S.p.A., 31033 Castelfranco Veneto (TV) (IT)
(72) Inventor: RIGONI, Mattia, 31015 Conegliano (TV) (IT); BACCHIN, Gian Luca, 31033 Castelfranco Veneto (TV) (IT); FOSCARO, Carlo, I-31050 Casacorba di Vedelago (TV) (IT)
(74) Representative: PGA S.p.A.

(57) **Abstract**

A cable clamping device (1) is described, which can be configured, for example, to engage one or more cables (2) to a bar (3) of a garden or land maintenance apparatus. The cable clamping device (1) comprises a support body (4) having a first through opening (5) and a second through opening (6), both passing through the support body, and a strap (7) extending from the support body (4). The strap (7) is configured to pass through the first opening (5), forming a first loop (9), and to pass through the second opening (6), forming a second loop (10) engaged with the first loop. In use, the cable clamping device (1) is fixed to the bar (3) that passes through the first loop (9), while the cables (2) are housed in a cavity between the second loop (10) and the first loop (9): in particular, the second loop is located externally and houses the first loop. An garden or land maintenance apparatus (100) that uses one or more cable clamps (1) is also described.

## Description

### FIELD OF THE INVENTION

The present invention relates to a cable clamping device. The cable clamping device of the invention can be configured to engage one or more cables to a bar or other rigid component of an apparatus, for example a garden or land maintenance apparatus. The invention also relates to the method of using the cable clamping device to secure one or more cables to a bar or other rigid component of an apparatus, for example a garden or land maintenance apparatus. Finally, the invention also relates to apparatus for maintaining gardens or land using one or more cable clamping devices as described and claimed below.

### STATE OF THE ART

In the field of land and garden maintenance, apparatus such as lawnmowers, hedge trimmers, brush cutters, trimmers, chainsaws, and more are used, which may have control transmission cables, power cables, or other types of cables that must be properly positioned and secured to rigid parts of the apparatus in order to avoid unwanted interactions between these cables and the operator or between these cables and moving parts of the apparatus.

For this purpose, cable ties are typically used to engage the cables in question and secure them to a rigid part of the apparatus, such as a bar on a lawnmower or a pole on a brush cutter or other rigid part that allows the cables to be secured using the cable tie.

The cable ties currently in use comprise an elongated band with a serrated surface that engages an opening in a stop element carried by one end of the cable tie, thus creating a loop that can be adjusted in width to accommodate the cables to be gathered together or the cables and a bar of the apparatus. The stop element also includes a protrusion operating at the opening described above to engage the teeth on the tie, allowing the tie to be inserted through the opening but substantially preventing or hindering the removal of the tie from the opening itself.

Although the clamps described above are widely used, they have various limitations and drawbacks, particularly when used in the garden or land maintenance apparatus described above.

Firstly, traditional cable ties do not allow the cable tie to be positioned in advance on the apparatus to which the cables are to be attached without simultaneously attaching the cables themselves. Furthermore, known types of cable ties do not ensure precise and effective anchoring of the cables.

In addition, traditional cable ties require a tight closure on the cables, which can sometimes damage the cables or at least the cable sheathing. It should also be noted that known cable ties do not allow for axial sliding of the cables with respect to the cable tie, as this would compromise the fastening of the cable tie.

Finally, securing cables to a bar of an apparatus using known cable ties requires the simultaneous positioning of the cable tie and cables in relation to the bar and a single tightening phase of the cable tie to both secure the cable tie to the bar and secure the cables to the same bar. This requires a certain amount of skill on the part of the operator and, in any case, is an impractical assembly operation, with the risk that the cable tie may not be positioned and/or the cables may not be secured properly.

### AIM OF THE INVENTION

The invention therefore aims to resolve at least one of the drawbacks and/or limitations of the previous solutions.

A first objective of the present invention is to provide a cable clamping device capable of effectively securing one or more cables to a bar or tube, in particular of garden maintenance apparatus, avoiding one or more of the drawbacks described above.

It is also an aim of the invention to provide a cable clamping device that is more flexible in use and installation, for example by allowing the cable clamping device to be fixed in position during production and leaving it up to the end user to clamp the cables.

In addition, it is an aim of the invention to define a cable clamping device that is particularly designed to adequately clamp cables of various types, for example, electrical cables, mechanical control cables, signal transport cables, limiting the possibility of damaging or wearing out the cables or cable sheathing over time.

Finally, an auxiliary purpose of the invention is to offer a cable clamping device that is simple in structure and has a compact design, particularly in its configuration for use.

These and other purposes, which will become clearer from the following description, are essentially achieved by a cable clamping device in accordance with one or more of the attached claims and/or the following aspects.

### SUMMARY

Aspects of the invention are described below.

In a 1st aspect, a cable clamping device is provided, in particular configurable to engage one or more cables to a bar of an apparatus for the maintenance of gardens or land, said cable clamping device (1) comprising:
a support body (4) having a first through opening (5) and a second through opening (6), both passing through the support body (4), and
a strap (7) extending from the support body (4) and configured to:
   - pass through the first through opening (5), forming a first loop (9), and
   - pass through the second through opening (6), forming a second loop (10) engaged with the first loop (9).

In a 2nd aspect in accordance with the first aspect, the first through opening (5) and the second through opening (6) are spaced apart from each other.

In a 3rd aspect according to the second aspect, the support body (4) comprises a connecting band (11), interposed between the first and second through openings (5, 6), which spaces the first through opening (5) from the second through opening (6).

In a 4th aspect according to the second or third aspect, the first through opening (5) and the second through opening (6) are arranged at opposite ends of the support body (4).

In a 5th aspect according to any one of the preceding aspects, in combination with the third aspect, the connecting band (11) is configured to be positioned at least partially around the first loop (9) and to cooperate with the strap (7) to form the second loop (10).

In a 6th aspect according to any one of the preceding aspects, the cable clamping device is configurable in:
- a rest condition, in which the strap (7) does not pass through either the first or second through opening (5, 6), optionally wherein, in the rest condition of the cable clamping device, the strap (7) is arranged flat.

In a 7th aspect according to any one of the preceding aspects, the cable clamping device can be configured in:
- a first operating condition, in which the strap (7) passes through the first through opening (5), arranging a first longitudinal portion of the strap itself in a ring configuration to form the first loop (9).

In an 8th aspect according to any one of the preceding aspects, in combination with the 3rd aspect, the cable clamping device can be configured in:
- a second operating condition, in which the strap (7) also passes through the second through opening (6), arranging a second longitudinal portion of the strap (7) and the connecting band (11) around the first loop (9) to form the second loop (10).

In a 9th aspect according to the preceding aspect, when said cable clamping device is in the second operating condition, the connecting band (11) is bent around the first loop (9), placing the second through opening (6) in a position adjacent to the first loop (9) and peripherally spaced from the first through opening (5).

In a 10th aspect according to any one of the preceding aspects, the strap (7) has a proximal end fixed to the support body (4) at the first through opening (5), and wherein the first loop (9) is predominantly or completely defined by a/the first longitudinal portion of the strap (7).

In an 11th aspect according to the preceding aspect, the second loop (10) is defined completely or mainly by a/the second longitudinal portion of the strap (7), following the first longitudinal portion, and by said connecting band (11).

In a 12th aspect according to any one of the preceding aspects, the second loop (10) extends externally and overlaps the first loop (9).

In a 13th aspect according to any one of the preceding aspects, the support body (4) comprises a first stop element (12), optionally of tubular shape.

In a 14th aspect according to the preceding aspect, the first stop element (12) comprises a first perimeter wall and a first protrusion (14) emerging from the first perimeter wall towards the inside of the first stop element (12) and operating at the first through opening (5).

In a 15th aspect according to the preceding aspect, the first protrusion (14) is configured, at least in a first operating condition, to act in contact with an active surface of the strap (7) when the latter passes through the first through opening (5).

In a 16th aspect according to any one of the preceding aspects, the support body (4) comprises a second stop element (15), optionally of tubular shape.

In a 17th aspect according to the preceding aspect, the second stop element (15) comprises a second perimeter wall and a second protrusion (17) emerging from the second perimeter wall towards the inside of the second stop element (15) and operating in correspondence with the second through opening (6). In an 18th aspect according to the preceding aspect, the second protrusion (17) is configured, at least in a first operating condition, to act in contact with an active surface of the strap (7) when the latter passes through the second through opening (6).

In a 19th aspect according to any one of the preceding aspects, said active surface of the strap (7) comprises a plurality of teeth (18) arranged transversely to a prevailing direction of development of the strap (7).

In a 20th aspect according to any one of the preceding aspects in combination with the 14th aspect, the first protrusion (14), in said at least one first operating condition, is configured to:
- allow the insertion and advancement of the strap (7) through the first through opening (5),
- act in opposition to said active surface of the band (7), in particular against said one or more of said teeth (18), and prevent or oppose the extraction of the band (7) from the first through opening (5).

In a 21st aspect according to any one of the preceding aspects in combination with the 14th aspect, the first stop element (12) comprises a first tab (19) extending from the first protrusion (14) outside the first perimeter wall and activatable to move the first protrusion (14) relative to the first perimeter wall toward a second operating condition in which the first protrusion (14) is unable to act in contact with an active surface of the strap (7), in particular is unable to act in contrast against one or more of said teeth (18), consequently not preventing the extraction of the strap (7) from the first through opening (5).

In a 22nd aspect according to any one of the preceding aspects in combination with the 17th aspect, the second protrusion (17), in said at least one first operating condition, is configured to:
- allow the insertion and advancement of the strap (7) through the second through opening (6),
- act in contrast against said active surface of the strap (7), in particular against one or more of said teeth (18), and prevent or counteract the extraction of the strap (7) from the second through opening (6).

In a 23rd aspect according to any one of the preceding aspects in combination with the 17th aspect, the second stop element (15) comprises a second tab (20) extending from the second protrusion (17) outside the second perimeter wall and activatable to move the second protrusion (17) relative to the second perimeter wall towards a second operating condition in which the said second protrusion (17) is not able to act in contact with an active surface of the strap (7), in particular is not able to act in contrast against one or more of said teeth (18), consequently not preventing the extraction of the strap (7) from the second through opening (6).

In a 24th aspect according to any one of the preceding aspects in combination with the 3rd aspect, the connecting band comprises one or more concave seats (23), each configured to receive a respective portion of a cable to be secured between the first and second loops (10).

In a 25th aspect according to the preceding aspect, the concave seats (23) are a plurality, optionally two or three or more, adjacent to each other and arranged according to an axis perpendicular to the prevailing direction of development of the strap.

In a 26th aspect according to one of the two preceding aspects, the concave seats (23) are open and arranged so that when the second loop (10) is formed, the concavity of each of the seats faces the first loop (9).

In a 27th aspect according to one of the three preceding aspects, each of the concave seats (23) has a semi-cylindrical shape.

In a 28th aspect according to any one of the preceding aspects, the strap (7) has a tapered distal end to facilitate insertion into said first and second through openings (6).

In a 29th aspect according to any one of the preceding aspects, the strap (7) is an elongated flexible element.

In a 30th aspect according to any one of the preceding aspects, the strap (7) has a length, width, and thickness measured by placing the strap (7) flat such that:
- the length is at least 10 times greater than the width,
- the width is at least 5 times greater than the thickness.

In a 31st aspect according to any one of the preceding aspects, in combination with the 3rd aspect, the connecting band (11) is a flexible elongated element.

In a 32nd aspect according to any one of the preceding aspects, in combination with the 3rd aspect, the connecting band (11) has a length, width, and thickness such that:
- the length measured by laying the connecting band (11) flat is at least twice the width,
- the width is at least 5 times greater than the thickness.

In a 33rd aspect according to any one of the preceding aspects, the strap (7) and the support body (4) are made in a single piece, optionally by molding.

In a 34th aspect according to any one of the preceding aspects, the strap (7) and the support body (4) are made of plastic material, optionally nylon.

A 35th aspect concerns the use of the cable clamping device according to any one of the preceding aspects to engage one or more cables (2) to a bar (3), in particular to a bar of a garden or land maintenance apparatus, comprising successively inserting the strap (7) into the first opening and then into the second opening to form the first loop (9) around the bar (3) and then forming the second loop (10) around the one or more cables (2).

In a 36th aspect according to the preceding aspect, the use comprises a step of pulling a terminal portion of the strap (7) to tighten the first loop (9) around the bar (3) and the second loop (10) around the one or more cables (2).

In a 37th aspect according to the 35th or 36th aspect, said one or more cables (2) are constrained in an area outside the first loop (9) and inside the second loop (10).

In a 38th aspect according to the 35th or 36th or 37th aspect, before forming the second loop (10), said one or more cables (2) are arranged externally and in contact with the first loop (9).

In a 39th aspect according to 35th or 36th or 37th or 38th aspect, each of said cables (2) is inserted into a respective concave seat (23) which, once the second loop (10) has been formed, has a concavity facing the first loop (9).

In a 40th aspect according to the 35th or 36th or 37th or 38th or 39th aspect, the first loop (9) is tightened around the bar (3) and the second loop (10) is arranged around the one or more cables (2) and around the first loop (9).

A 41st aspect concerns a garden or land maintenance apparatus comprising a handle equipped with one or more control members, and one or more cables (2) connecting the one or more control members to one or more of the following components of the device:
- a control unit,
- an actuator,
- a motor,
- a moving component,
and at least one cable clamping device according to any of aspects 1 to 34, engaging said one or more cables (2) to a bar (3) of the apparatus, wherein the first loop (9) receives and engages the bar (3) and wherein the second loop (10) receives and engages said one or more cables (2).

In a 42nd aspect according to the preceding aspect, the first loop (9) is tightened around the bar (3) and the second loop (10) is arranged around the one or more cables (2) and around the first loop (9).

In a 43rd aspect according to either of the two preceding aspects, said one or more cables (2) are secured to the bar (3) at a zone outside the first loop (9) and inside the second loop (10) (i.e., between the two loops).

In a 44th aspect according to any of the three preceding aspects, one or more cables (2) are arranged externally and in contact with the first loop (9).

In a 45th aspect according to any of the four preceding aspects, each of said cables (2) is inserted into a respective concave seat (23), which has a concavity facing the first loop (9) and is arranged in a cavity between the first and second loops (9, 10).

### BRIEF DESCRIPTION OF THE DRAWINGS

Some embodiments and aspects of the invention will be described below with reference to the accompanying drawings, which are provided for illustrative purposes only and are therefore not limiting, in which:
- Figure 1 is a perspective view of a cable clamping device for securing one or more cables to a bar or tube, in particular for garden maintenance apparatus, in accordance with the present invention;
- Figures 2 to 5 show a perspective view of the cable clamping device of Figure 1, in successive stages of engaging the device itself to a bar or tube and then securing cables to the bar or tube;
- Figure 6 is a broken longitudinal section of the cable clamping device of Figure 1;
- Figure 7 is a perspective view of the cable clamping device of Figure 1 sectioned transversely at one of the two stop elements of the device itself;
- Figure 8 is a cross-section showing the cable clamping device in the condition shown in Figure 5;
- Figures 9 and 10 show examples of gardens or land maintenance apparatuses using the device referred to in the previous figures.

### DEFINITIONS AND CONVENTIONS

Note that in this detailed description, corresponding parts illustrated in the various figures are indicated with the same reference numbers.

The figures may illustrate the subject matter of the invention using non-scale representations; therefore, parts and components illustrated in the figures relating to the subject matter of the invention may be schematic representations.

### DETAILED DESCRIPTION

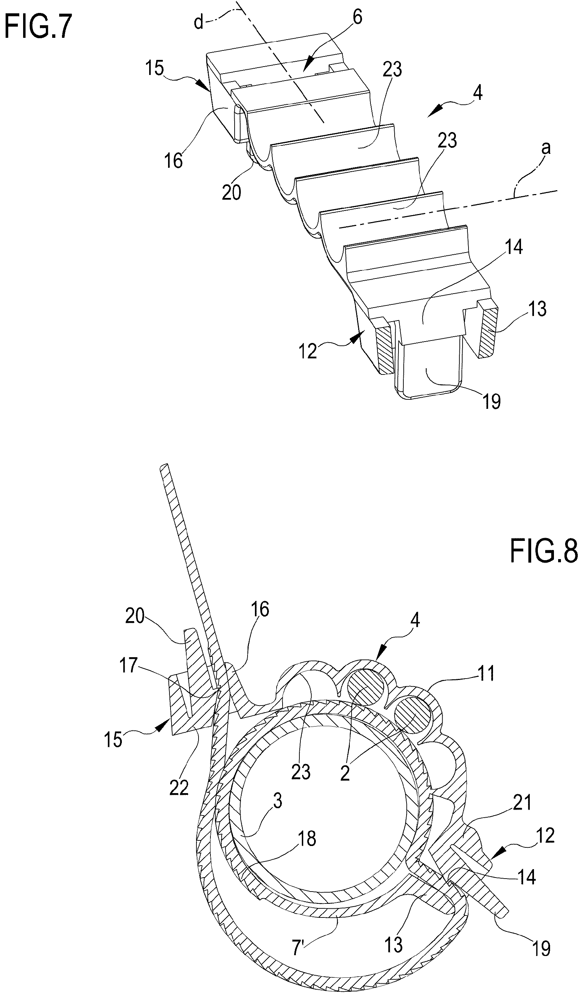

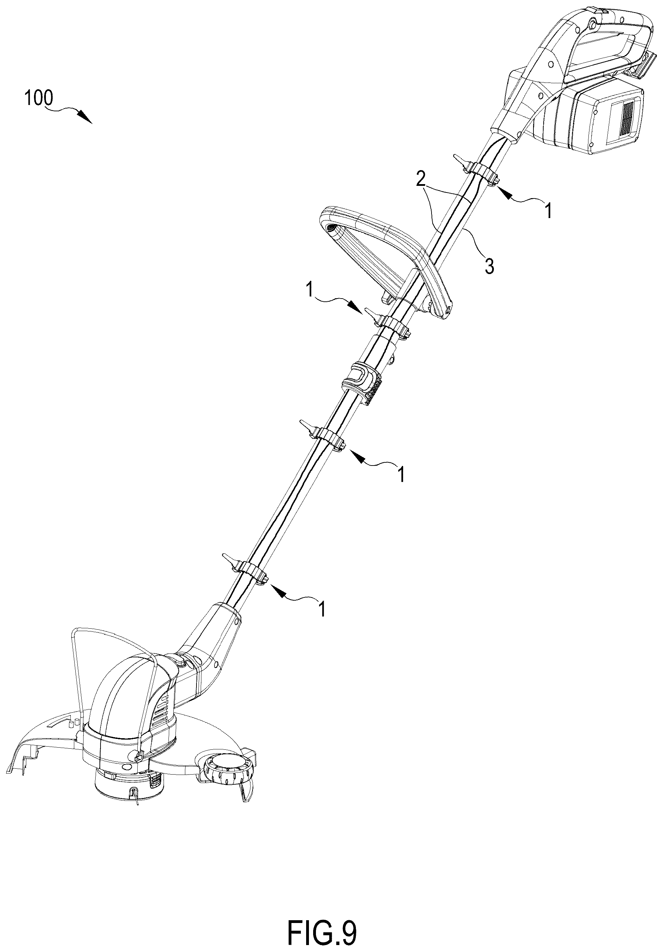

Reference numeral 1 refers to a cable clamping device in accordance with aspects of the present invention. The cable clamping device 1 is configurable to engage one or more cables 2 to a rigid structure such as a bar, rod, or tube 3, in particular of a gardens or land maintenance apparatus. For example, the cable clamping device 1 can be used to engage one or more cables 2 to a bar or tube 3 forming part of a handle or grip of apparatus such as lawnmowers, hedge trimmers, brush cutters, trimmers, chainsaws, and more, which may have control transmission cables, power cables, or other types of cables that must be properly positioned and secured to rigid parts of the apparatus (reference numeral 100 illustrates examples of such apparatus in Figures 8 and 9).

However, it is not excluded that device 1 may be used in areas other than those indicated and/or to group cables by securing them to a rigid structure of any kind.

The cable clamping device 1 comprises a support body 4 having a first through opening 5 and a second through opening 6, both passing through the support body. The device 1 also has a strap 7 extending from the support body 4, away from the latter.

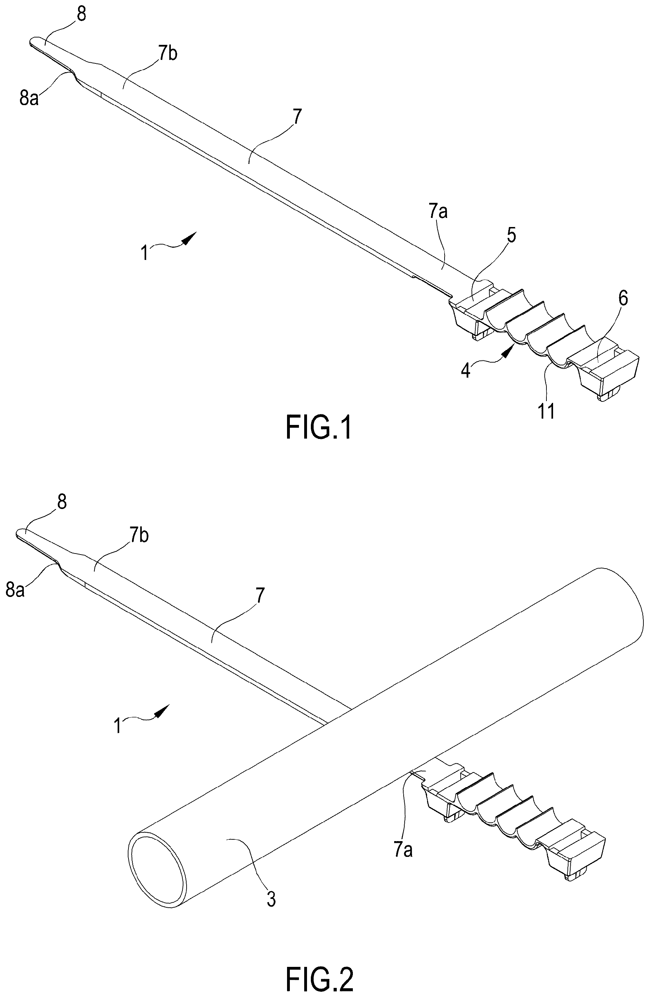

In the example shown, the strap 7 has a proximal end 7a, fixed to the support body 4 at or near the first through opening 5, and a tapered distal end 7b, configured to facilitate the insertion of the strap 7 into the first through opening 5 and the second through opening 6, as described in more detail below; in particular, as can be seen from Figure 1, the strap 7 has a tip 8 at the distal end 7b with a width significantly less than the width of the rest of the strap 7; the tip 8 may have a rounded free end and a connection 8a of the tip to the rest of the strap made with a strap section having sloping side walls, as illustrated in Figure 2, for example.

The strap 7 is, as a whole, an elongated element which, thanks to its reduced thickness and the material with which it is made, is flexible: the strap 7 can therefore be folded or bent to form one or more loops as described below. In one possible embodiment, the strap is a highly elongated body with a length, width, and thickness (measured by laying the strap flat) that satisfy the following geometric properties, for example:
- length at least 10 times greater than width,
- width at least 5 times greater than the thickness (the width is preferably constant apart from, as mentioned, the tip 8b),
- thickness reduced to allow high flexibility, for example between 0.2 and 2 mm.

In terms of construction, the strap 7 and the support body 4 are, for example, made in a single piece, optionally by molding. In the example specifically illustrated, the strap and the support body are made of plastic, optionally nylon.

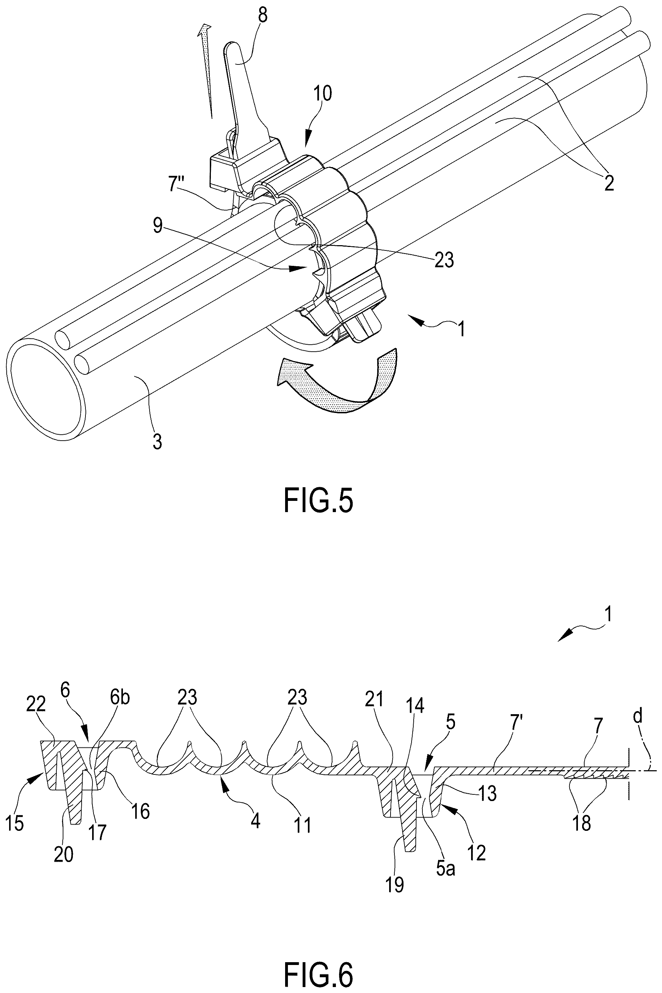

Thanks to its flexibility, the strap 7 can be folded or bent back on itself to pass through the first opening 5, forming a first loop 9 designed to receive said bar 3 (or other sufficiently rigid structure), and pass through the second opening 6 forming a second loop 10 engaged with the first loop 9, to engage said one or more cables 2 with respect to the first loop 9 and therefore with respect to the bar 3 received in the first loop itself. As can be seen from the attached figures, the first through opening 5 and the second through opening 6 are spaced apart: in fact, the support body 4 comprises a connecting band 11, interposed between the first and second through openings, which spaces the first through opening 5 from the second through opening 6. In the example illustrated in the accompanying figures, the first through opening 5 and the second through opening 6 are located at opposite ends of the support body 4. In turn, the connecting band 11 (see Figures 5 and 8) is configured to be positioned at least partially around the first loop 9 (in Figure 8, it can be seen how the connecting band covers an arc of 90-180° around the first loop) and to cooperate with the strap 7 to form the second loop 10. In the example shown in Figures 5 and 8, the entire connecting band 11 is arranged around part of the perimeter of the first loop 9 (in other words, the connecting band is positioned radially outside with respect to the first loop and follows part of the perimeter of this latter), cooperating with a portion of the strap (part 7") to form the second loop.

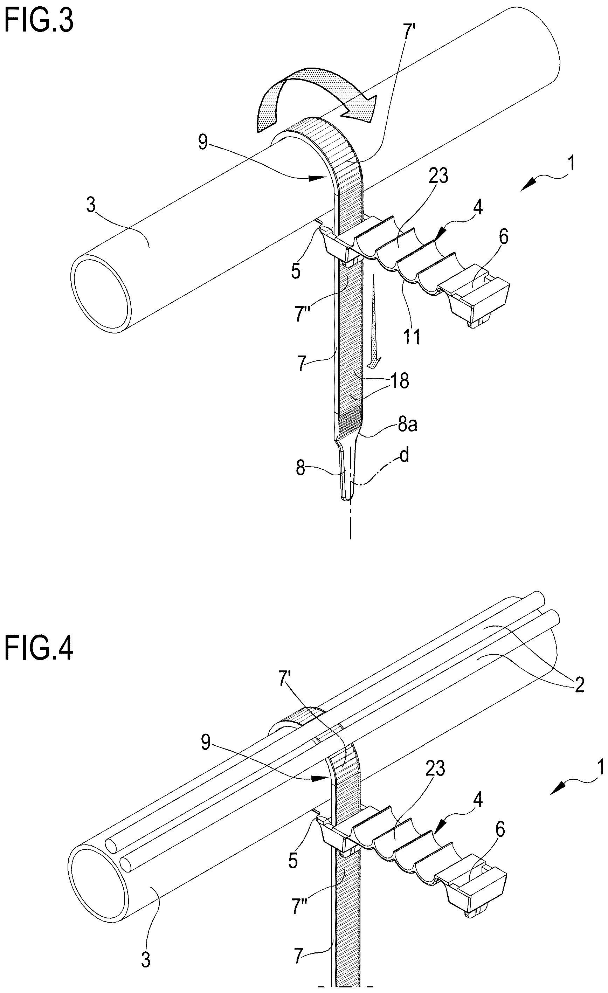

Going into greater detail, the cable clamping device 1 can be configured in a rest position (shown in Figure 1), in which the strap 7 does not pass through either the first or second through-holes 5, 6: for example, in the rest position of the cable clamping device 1, the strap 7 can lie flat, as also shown in Figure 1. The cable clamping device 1 can also be configured in a first operating position (shown in Figures 3 and 4), in which strap 7 passes through the first through opening 5, arranging a first longitudinal portion 7' of the strap 7 itself in a ring configuration to form the first loop 9 which, as illustrated in Figures 3 and 4, captures the bar 3 to which the cables 2 are to be secured. The cable clamping device 1 can also be configured in a second operating condition (shown in Figures 5 and 8), in which the strap 7 also passes through the second through opening 6, arranging a second longitudinal portion 7" of the strap 7 and the connecting band 11 around the first loop 9 to form the second loop 10. In accordance with one aspect, when the cable clamping device 1 is in the second operating condition, the connecting band 11 is folded or curved around the first loop, placing the second through opening 6 in a position adjacent to the first loop 9 and peripherally spaced from the first through opening 5. In other words, once the first loop 9 has been created, and after one or more cables 2 have been suitably positioned externally and in contact with the first loop 9, as shown in Figure 4, the second loop 10 is obtained as follows:
- the connecting band 11 is folded or curved around the first loop 9; e.g., in a counterclockwise direction as shown in Figure 4, overlapping the cables 2 and bringing the position of the second through opening 6 beyond the cables themselves,
- the second longitudinal portion 7" of the strap 7 (i.e., a section of strap 7 emerging from the first through opening 5 away from the first loop 9) is folded or curved around the first loop 9 in the opposite direction, i.e., clockwise in Figure 4;
- the strap 7 is then inserted into the second opening so that the second longitudinal portion of the strap 7" and the connecting band 11 form the second loop 10, which effectively locks the one or more cables 2 against the first loop 9 and against the bar 3.

As can be seen from Figures 3-5, the first loop 9 is mainly or completely defined by the first longitudinal portion 7' of the strap 7, while the second loop 10 is completely or mainly defined by the second longitudinal portion 7" (following the first longitudinal portion 7') of the same strap, and by the connecting band 11. For this purpose, the connecting band 11 is also an elongated flexible element. In a possible embodiment, assuming that the device 1 is placed on a flat surface (Figure 1), the length, width, and thickness of the connecting band may be as follows:
- the length of the connecting band is at least twice the width of the band itself,
- width of the connecting band at least twice its thickness.

According to an aspect of the invention, the second loop 10 extends outwardly and overlaps the first loop 9: in practice, the second loop 10 is located radially outside the first loop 9, which is contained (at least radially) within the second loop (see Figure 5 and Figure 8). For example, the second loop 10 has a radially inner surface which, at various points/areas, can act in contact with a radially outer surface of the first loop 9. In the example illustrated in Figure 5 and Figure 8, contact between the radially inner surface of the second loop and the radially outer surface of the first loop is present in some areas of the outer perimeter of the first loop: however, it should be noted that in the area where one or more cables 2 are captured, the two loops 9 and 10 are not in contact. Furthermore, the shape of the two loops 9 and 10 allows the cables to be locked radially, but also to slide axially, i.e., perpendicularly to the plane of Figure 8.

Going into further detail in this description, and referring to Figures 6 and 7, it should be noted that the support body 4 comprises a first stop element 12, for example of tubular shape, which delimits the first through opening 5 inside it; the first stop element 12 comprises a first perimeter wall 13 and a first protrusion 14 emerging from the first perimeter wall 13 towards the inside of the first stop element and operating in correspondence with the first through opening 5 (which is in fact partly delimited by the first protrusion): the first protrusion 14 is deformable and is specifically configured, in a first operating condition, to act in contact with an active surface of the strap 7 when the latter passes through the first through opening 5.

The support body 4 also includes a second stop element 15, also of tubular shape, delimiting the second through opening 6; the second stop element 15 includes a second perimeter wall 16 and a second protrusion 17 emerging from the second perimeter wall 16 towards the inside of the second stop element and operating at the second through opening 6 (which is in fact partly delimited by the second protrusion). In the example illustrated, the first and second stop elements 15 and 16 have a substantially prismatic perimeter wall: however, the possibility of a different geometric configuration is not excluded. Similar to the first protrusion 14, the second protrusion 17 can also deform and is specifically configured, in a first operating condition, to act in contact with an active surface of the strap 7 when the latter passes through the second through opening 6.

More specifically, in the first operating condition, the first protrusion 14 is arranged so as to allow the insertion and advancement of the strap 7 through the first through opening 5, but at the same time to act in contrast against the active surface of the strap 7 and prevent or counteract the extraction of the clamp from the first through opening.

As can be seen from the accompanying figures, the strap 7 may be provided with a plurality of teeth 18 arranged on the active surface of the strap 7, transversely to the prevailing direction of development "d" of the strap itself, i.e., directed in the direction of the width of the strap and preferably equidistant from each other along the longitudinal development of the strap itself. Therefore, in the first operating condition, the first protrusion 14 can act in opposition to one or more of said teeth 18 and prevent or counteract the extraction of the strap 7 from the first through opening 5.

It should also be noted that, in accordance with a further aspect, the first stop element 12 may also comprise a first tab 19 extending from the first protrusion 14 outside the first perimeter wall 13, so that it can be activated by an operator to move the first protrusion 14 with respect to the first perimeter wall 13 towards a second operating condition in which the first protrusion is unable to act in contact with an active surface of the strap 7, in particular, it is unable to act in contrast against one or more of said teeth 18 and therefore is unable to prevent or counteract the extraction of the strap 7 from the first through opening 5.

Similar to what has been described for the first protrusion 14, the second protrusion 17 of the second stop element 15, when in its first operating condition, is also configured to allow the insertion and advancement of the strap 7 through the second through opening 6, but at the same time act against the active surface of the strap, for example against one or more of said teeth 18, and prevent or counteract the extraction of the strap from the second through opening 6.

In accordance with a further aspect, the second stop element may also comprise a respective second tab 20 extending from the second protrusion 17 outside the second perimeter wall 16, to be activated by an operator and allow the second protrusion 17 to be moved with respect to the second perimeter wall 16 towards a second operating condition in which the second protrusion is not able to act in contact with an active surface of the strap 7, in particular is not able to act in contrast against one or more of said teeth 18 and therefore does not prevent the extraction of the clamp from the second through opening.

In practice, by acting on the first tab 19, it is possible to bend or rotate the first protrusion 14 slightly (around a plastic hinge zone 21 of the first stop element 12) and thus widen the minimum passage gap 5a of the first opening 5, while by acting on the second tab 20 it is possible to bend or rotate the second protrusion 17 slightly (around a plastic hinge zone 22 of the second stop element 15) and thus widen the minimum passage gap 6b of the second opening 6.

Moving on now to the specific structure of the connecting band 11, it should be noted that this band may be provided with one or more concave seats 23, each configured to receive a respective portion of a cable to be secured to the bar. There are a plurality of concave seats, for example two or three or more, adjacent to each other and arranged along an axis "a" perpendicular to the prevailing direction of development "d" of the band. These seats are open and arranged so that when the second loop 10 is formed, the concavity of each of the seats faces the first loop, thus engaging the one or more cables interposed between the first and second loops. From a geometric point of view, the concave seats have, for example, a semi-cylindrical shape.

According to an aspect, the shape of the two loops 9, 10 and in particular of the concave seats 23 (described below) may allow the cables to be locked radially, but to be able to slide in the axial direction, i.e., perpendicular to the plane of Figure 8.

The invention also includes a method of using the cable clamping device 1 described above to engage one or more cables 2 to a bar 3 (or other rigid element), in particular to a bar of a garden maintenance apparatus 100. The method of use involves positioning the cable clamping device 1 next to the bar 3 and then inserting the strap 7 into the first opening 5 to form the first loop 9 around the bar; then, after positioning the cable(s) 2 in contact with the first loop 9 and outside the latter, the second loop 10 is formed around the one or more cables, which are thus trapped in the cavity formed between the first and second loops 9 and 10 and secured to the bar. At this point, as shown in Figure 5, the first loop 9 is tightened around the bar 3 and the second loop 10 is arranged around the one or more cables 2 and around the first loop 9: in practice, the two thus formed loops 9 and 10 may be substantially concentric. In accordance with an aspect of the method of use, a step is provided for pulling a terminal portion of the strap 7 to tighten the first loop 9 around the bar 3 and to form the second loop 10 around the one or more cables 2. Advantageously, following the formation of the first and second loops as described, said one or more cables are constrained in said cavity external to the first loop 9 and internal to the second loop 10.

In accordance with a further aspect, each of said one or more cables is inserted into a respective concave seat 23 present on the connecting band 11. As can be seen in Figure 5, once the second loop 10 has been formed, each concave seat 23 has a concavity facing the first loop 9 and accommodates a respective cable 2. It should be noted that the concave seats radially lock the respective cable, while allowing it to slide axially, i.e., perpendicularly to the section plane of Figure 8, thus allowing limited adaptability of the axial position of the cable, which, being able to slide, can adapt to any deformations/movements of the bar to which it is associated.

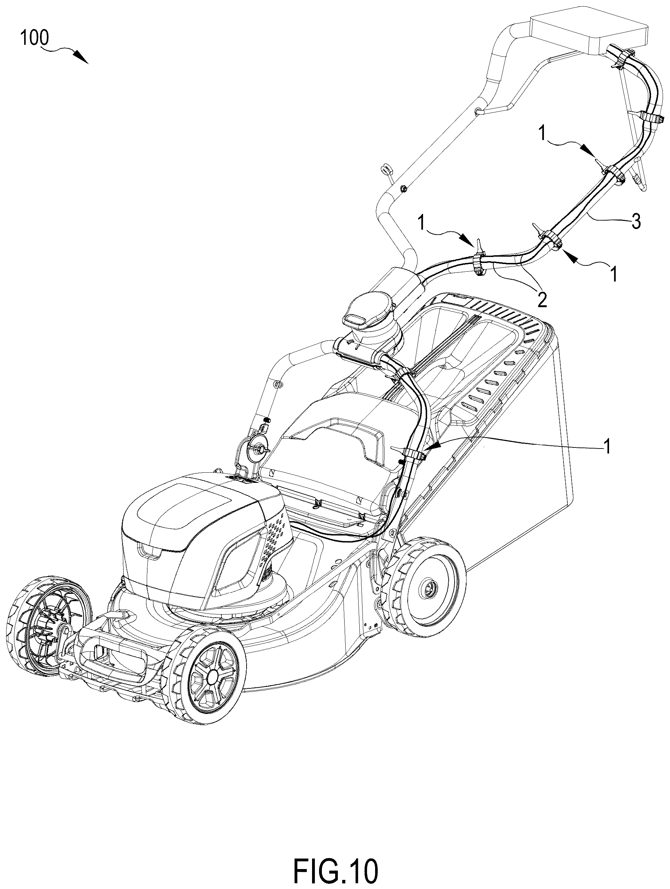

Finally, the invention also includes an apparatus 100 (see Figures 9 and 10 showing a brush cutter and a lawn mower, respectively) for garden maintenance comprising a handle equipped with one or more control members: for example, buttons, mechanical levers, knobs, or other. The apparatus 100 comprises one or more connecting cables 2 (e.g., electrical cables, signal transmission cables, or mechanical cables) that are designed to connect the one or more control members to one or more of the following components of the apparatus:
- a control unit,
- an actuator (e.g., acting on a cutting tool),
- a motor (e.g., an electric motor acting on one or more blades),
- a moving component (e.g., a part that can be moved by a mechanical cable).

Finally, the apparatus 100 comprises one or more cable claiming device 1, each of the type described above or according to any of the claims attached hereto. Each cable clamping device 1 couples said one or more cables to a bar 3 of the apparatus 100: for example, in Figure 9, various devices 1 are shown spaced apart from each other to engage one or more cables 2 to a rod of the brush cutter 100. Figure 10 shows various cable clamping devices 1 for engaging one or more cables 2 to bars of a handle of a grass cutter 100. In each case, each device 1 is installed so that the first loop 9 receives and engages the bar/rod 3 and the second loop 10 receives and engages said one or more cables. As already described, the first loop 9 is tightened around the bar 3 and the second loop 10 is arranged around the one or more cables 2 and around the first loop 9. More specifically, the one or more cables 2 are secured to the bar in an area outside the first loop and inside the second loop. More precisely, each cable 2 is arranged externally and in contact with the first loop 9, and is inserted into a respective concave seat 23, which has a concavity facing the first loop 9. Furthermore, the shape of the two loops 9 and 10 and in particular of the concave seats 23 allows the cables to be locked radially, but to be able to slide in the axial direction if necessary, which is particularly useful, for example, for use on the lawnmower 100 of Figure 10, where a distal part of the handle can be moved angularly with respect to a proximal part of the handle itself thanks to a joint interposed between the two parts.

## Claims

1. Cable clamping device, in particular configurable to engage one or more cables to a bar of an apparatus for the maintenance of gardens or lands, said cable clamping device (1) comprising:
a support body (4) having a first through opening (5) and a second through opening (6), both passing through the support body (4), and
a strap (7) extending from the support body (4) and configured to:
- pass through the first through opening (5), forming a first loop (9), and
- pass through the second through opening (6) forming a second loop (10) engaged to the first loop (9).

2. Cable clamping device according to claim 1, wherein the first through opening (5) and the second through opening (6) are spaced from each other.

3. Cable clamping device according to claim 2, wherein the support body (4) comprises a connecting band (11), interposed between the first and the second through opening (5, 6), which spaces the first through opening (5) from the second through opening (6).

4. Cable clamping device according to claim 2 or 3, wherein the first through opening (5) and the second through opening (6) are arranged at opposite ends of the support body (4).

5. Cable clamping device according to any one of the preceding claims, when in combination with claim 3, wherein the connecting band (11) is configured to be positioned at least partially around the first loop (9) and cooperate with the strap (7) to form the second loop (10).

6. Cable clamping device according to any one of the preceding claims, when in combination with claim 3, wherein the cable clamping device is configurable in:
- a rest condition, wherein the strap (7) does not pass through either the first or the second through opening (5, 6), optionally wherein in the rest condition of the cable clamping device the strap (7) is arranged flat,
- a first operating condition, wherein the strap (7) passes through the first through opening (5), arranging a first longitudinal portion of the strap itself according to a ring configuration to form the first loop (9); and
- a second operating condition, wherein the strap (7) also passes through the second through opening (6), arranging a second longitudinal portion of the strap (7) and the connecting band (11) around the first loop (9) to form the second loop (10).

7. Cable clamping device according to claim 6 wherein, when said cable clamping device is in the second operating condition, the connecting band (11) is folded around the first loop (9), arranging the second through opening (6) in a position close to the first loop (9) and peripherally spaced from the first through opening (5).

8. Cable clamping device according to any one of the preceding claims, wherein the strap (7) has a proximal end fixed to the support body (4) at the first through opening (5), and wherein the first loop (9) is mainly or completely defined by the/a first longitudinal portion of the strap (7).

9. Cable clamping device according to claim 8, wherein the second loop (10) is defined completely or mainly by the/a second longitudinal portion of the strap (7), following the first longitudinal portion, and by said connecting band (11); and
wherein the second loop (10) extends externally and overlapping the first loop (9).

10. Cable clamping device according to any one of the preceding claims, wherein the support body (4) comprises a first stop element (12), optionally of tubular shape;
wherein the first stop element (12) comprises a first perimeter wall and a first protrusion (14) emerging from the first perimeter wall inwardly of the first stop element (12) and operating at the first through opening (5); and
wherein the first protrusion (14) is configured, in a first operating condition, to act in contact with an active surface of the strap (7) when the latter passes through the first through opening (5);
wherein the support body (4) comprises a second stop element (15), optionally of tubular shape;
wherein the second stop element (15) comprises a second perimeter wall and a second protrusion (17) emerging from the second perimeter wall inwardly of the second stop element (15) and operating at the second through opening (6); and
wherein the second protrusion (17) is configured, in a first operating condition, to act in contact with an active surface of the strap (7) when the latter passes through the second through opening (6).

11. Cable clamping device according to the preceding claim, wherein the first protrusion (14), in its first operating condition, is configured to:
- allow the insertion and advancement of the strap (7) through the first through opening (5),
- act in contrast against said active surface of the strap (7), in particular wherein said active surface of the strap (7) comprises a plurality of teeth (18) arranged transversely to a main extension direction of the strap (7) and said first protrusion is configured to act in contrast against said one or more of said teeth (18), and prevent or counteract the extraction of the strap (7) from the first through opening (5);
wherein the first stop element (12) comprises a first tab (19) extending from the first protrusion (14) externally to the first perimeter wall and activatable to move the first protrusion (14) with respect to the first perimeter wall towards a second operating condition wherein the first protrusion (14) is not able to act in contact with an active surface of the strap (7), in particular is not able to act in contrast against one or more of said teeth (18) consequently not preventing the extraction of the strap (7) from the first through opening (5);
wherein the second protrusion (17), in its first operating condition, is configured to:
- allow the insertion and advancement of the strap (7) through the second through opening (6),
- act in contrast against said active surface of the strap (7), in particular wherein said active surface of the strap (7) comprises a plurality of teeth (18) arranged transversely to a main extension direction of the strap (7) and said second protrusion is configured to act in contrast against said one or more of said teeth (18), and prevent or counteract the extraction of the strap (7) from the second through opening (6);
wherein the second stop element (15) comprises a second tab (20) extending from the second protrusion (17) externally to the second perimeter wall and activatable to move the second protrusion (17) with respect to the second perimeter wall towards a second operating condition wherein such the second protrusion (17) is not able to act in contact with an active surface of the strap (7), in particular is not able to act in contrast against one or more of said teeth (18) consequently not preventing the extraction of the strap (7) from the second through opening (6);

12. Cable clamping device according to any one of the preceding claims, in combination with claim 3, wherein the connecting band comprises one or more concave seats (23), each configured to receive a respective portion of a cable to be constrained between the first and second loop (10); optionally wherein the connecting band comprises a plurality of concave seats (23) adjacently next to each other and arranged according to an axis perpendicular prevailing direction of development of the strap;
wherein each of said one or more the concave seats (23) is open and arranged so that when the second loop (10) is formed, the concavity of each of the one or more concave seats faces the first loop (9), optionally wherein each of the one or more concave seats (23) has a semi-cylindrical shape.

13. Cable clamping device according to any one of the preceding claims, wherein the strap (7) has a tapered distal end to facilitate the insertion into said first and second through opening (6);
wherein the strap (7) is a flexible elongated element, optionally having a length, width and thickness measured by arranging the strap (7) in a plane such that:
- the length is at least 10 times greater than the width,
- the width is at least 5 times greater than the thickness;
wherein the connecting band (11) is a flexible elongated element, optionally having a length, width and thickness such that:
- the length measured by arranging the connecting band (11) flat is at least 2 times greater than the width,
- the width is at least 5 times greater than the thickness;
wherein the strap (7) and the support body (4) are made in a single body, optionally by moulding;
wherein the strap (7) and the support body (4) are made of plastic material, optionally nylon.

14. Use of the cable clamping device according to any one of the preceding claims for engaging one or more cables (2) to a bar (3), in particular to a bar of a garden or land maintenance apparatus, comprising subsequently inserting the strap (7) into the first opening and then into the second opening to form the first loop (9) around the bar (3) and subsequently forming the second loop (10) around the one or more cables (2);
optionally wherein said one or more cables (2) are constrained in an area outside the first loop (9) and inside the second loop (10), even more optionally wherein each of said cables (2) is inserted in a respective concave seat (23) which, once the second loop (10) is formed, has a concavity facing the first loop (9).

15. Garden or land maintenance apparatus comprising a handle provided with one or more control members, and one or more cables (2) connecting the one or more control members with one or more of the following components of the apparatus:
- a control unit;
- an actuator member,
- a motor,
- a movable component,
and at least one cable clamping device according to any one of claims 1 to 13 engaging said one or more cables (2) to a bar (3) of the apparatus, wherein the first loop (9) receives and engages the bar (3) and wherein the second loop (10) receives and engages said one or more cables (2);
optionally wherein the first loop (9) is tight around the bar (3) and the second loop (10) is arranged around the one or more cables (2) and around the first loop (9), more in particular wherein each of said cables (2) is inserted in a respective concave seat (23), which has a concavity facing the first loop (9) and is arranged in a gap between the first and the second loop (9, 10).
